# EUROPEAN PATENT APPLICATION

(11) **EP 4 685 886 A2**
(43) Date of publication of application: **28.01.2026**
(21) Application number: 25187128.1
(22) Date of filing: 03.07.2025
(51) Int. Cl.: H01M 8/04014, H01M 8/04007, H01M 8/0612, H01M 8/0662, H01M 8/249

(54) **FUEL CELL SYSTEM INCLUDING VALVED ANODE TAILGAS OXIDIZER CONDUIT ASSEMBLY**

(30) Priority: 08.07.2024 US 202463668515 P
(71) Applicant: Bloom Energy Corporation, San Jose, CA 95134 (US)
(72) Inventor: HERZOG, Ralion, San Jose, 95134 (US); PATEL, Siddharth, San Jose, 95134 (US); WEINGAERTNER, David, San Jose, 95134 (US); LEE, Karen J., San Jose, 95134 (US); KRISHNADASS, Jayakumar, San Jose, 95134 (US); PETRUCHA, Michael, San Jose, 95134 (US); KEKELIS, Kyle, San Jose, 95134 (US)
(74) Representative: Wichmann, Hendrik

(57) **Abstract**

A fuel cell system includes a hotbox, a stack of fuel cells located in the hotbox and configured to generate power and an anode exhaust, an anode tail gas oxidizer (ATO) located in the hotbox and configured to oxidize a portion of the anode exhaust, a recycling conduit located outside of the hotbox and configured to receive the anode exhaust output from the hotbox, a fuel conduit assembly configured to provide fuel to the stack, and an ATO conduit assembly concentrically surrounding the fuel conduit assembly and configured to receive a first portion of the anode exhaust diverted from the recycling conduit and to provide the first portion of the anode exhaust to the ATO.

## Description

### FIELD

Aspects of the present invention relate to fuel cell systems and methods, and more particularly, to fuel cell systems including anode exhaust bypass components and a valved anode tailgas oxidizer conduit assembly.

### BACKGROUND

Fuel cells, such as solid oxide fuel cells, are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as solid oxide regenerative fuel cells, that also allow reversed operation, such that oxidized fuel can be reduced back to unoxidized fuel using electrical energy as an input.

### SUMMARY

According to various embodiments, a fuel cell system includes a hotbox, one or more stacks of fuel cells located in the hotbox and configured to generate power and an anode exhaust, an anode tail gas oxidizer (ATO) located in the hotbox and configured to oxidize a portion the anode exhaust, a recycling conduit located outside of the hotbox and configured to receive the anode exhaust output from the hotbox, a fuel conduit assembly configured to provide fuel to the one or more stacks, and an ATO conduit assembly concentrically surrounding the fuel conduit assembly and configured to receive a first portion of the anode exhaust diverted from the recycling conduit and to provide the first portion of the anode exhaust to the ATO.

According to various embodiments, a fuel cell power module comprises a hotbox; fuel cell columns located in the hotbox and comprising fuel cell stacks configured to generate power and an anode exhaust; a recycling conduit configured to receive the anode exhaust generated by the fuel cell columns and output from the hotbox; a bypass conduit configured to fluidly connect the recycling conduit to an exhaust processing system; a return conduit fluidly connected to the bypass conduit; and a central column surrounded by the fuel cell columns. The central column comprises an anode recuperator heat exchanger configured to heat fuel provided to the fuel cell columns using the anode exhaust; an anode tail gas oxidizer (ATO) surrounding the anode recuperator and configured to oxidize a portion of the anode exhaust; an anode exhaust cooler heat exchanger located above the anode recuperator heat exchanger; a fuel conduit assembly configured to provide the fuel to the fuel cell columns through the anode recuperator heat exchanger, wherein a central vertical axis of the fuel conduit assembly is laterally offset with respect to a central vertical axis of the central column; and an ATO conduit assembly located adjacent to the fuel conduit assembly and configured to fluidly connect the return conduit to the ATO.

According to various embodiments, a fuel cell system includes a plurality of fuel cell power modules each comprising at least one fuel cell column and an anode tail gas oxidizer (ATO); an oxidation module containing an exhaust oxidizer conduit and an injection nozzle located in the exhaust oxidizer conduit; a cathode exhaust manifold fluidly connecting the exhaust oxidizer to outlets of the ATOs of the plurality of fuel cell power modules; and an anode exhaust manifold fluidly connecting the injection nozzle to anode exhaust recycling conduits of the plurality of fuel cell power modules.

According to various embodiments, a method of operating a fuel cell system, comprises providing an air inlet stream to a stack of fuel cells located in a hotbox; providing a fuel inlet stream through a fuel conduit assembly to the stack of fuel cells to generate power, a cathode exhaust and an anode exhaust; providing the anode exhaust outside of the hotbox; recycling a first portion of the anode exhaust provided outside of the hotbox into the fuel inlet stream; providing a second portion of the anode exhaust provided outside of the hotbox into an exhaust processing system located outside of the hotbox; providing a third portion of the anode exhaust provided outside of the hotbox into an anode tail gas oxidizer (ATO) located in the hotbox; and providing the cathode exhaust into the ATO to oxidize the third portion of the anode exhaust.

### BRIEF DESCRIPTION OF THE DRAWINGS

The accompanying drawings, which are incorporated herein and constitute part of this specification, illustrate example embodiments of the invention, together with the general description given above and the detailed description given below.
FIGS. 1A and 1B are schematic representations of SOFC systems, according to various embodiments of the present disclosure.
FIG. 2A is a cross-sectional view showing a central column of the systems of FIGS. 1A and 1B, and FIG. 2B is a top view of the central column of FIG. 2A.
FIG. 3A is a perspective view of a concentric manifold that may be included in the central column of FIG.2A, FIG. 3B is a cross-sectional view of the concentric manifold, and FIG. 3C is a cross-sectional view showing a portion P of the central column of FIG. 2A, according to various embodiments of the present disclosure.
FIG. 4A is a cross-sectional view showing incoming fuel and anode exhaust flow through the central column of FIG. 2A, and FIG. 4B is a cross-sectional view showing outgoing anode exhaust flow through the central column of FIG. 2A, according to various embodiments of the present disclosure.
FIG. 5A is a partially transparent perspective view showing a central column including an alternative offset manifold, and FIG. 5B is a top view of the offset manifold of FIG. 5A, according to various embodiments of the present disclosure.
FIG. 6 is a cross-sectional view showing an alternative offset manifold, according to various embodiments of the present disclosure.
FIG. 7A is a cross-sectional view showing a central column including an alternative concentric manifold and FIG. 7B is a perspective view of an anode exhaust conduit assembly of FIG. 7A, according to various embodiments of the present disclosure.
FIG. 8A is a cross-sectional view showing a central column including an alternative concentric manifold, and FIG. 8B is a perspective view of an anode exhaust conduit assembly of FIG. 8A, according to various embodiments of the present disclosure.
FIG. 9A is a cross-sectional view showing a central column including an alternative concentric manifold, and FIG. 9B is a perspective view of an anode exhaust conduit assembly of FIG. 9A, according to various embodiments of the present disclosure.
FIG. 10A is a perspective view of a modular fuel cell power system, according to various embodiments of the present disclosure, FIG. 10B is a side view of the system of FIG. 10A, and FIG. 10C is a cross-sectional view showing an exhaust oxidizer of FIG. 10A. FIG. 10D is a perspective view of the injection nozzle of the exhaust oxidizer of FIG. 10C.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

Solid oxide fuel cell (SOFC) systems may be operated using a hydrocarbon fuel, such as natural gas, methane, propane, etc., or a non-hydrocarbon fuel such as hydrogen (H₂) or ammonia. Anode exhaust generated by a SOFC system may include carbon dioxide and water, along with relatively small amounts of hydrogen, nitrogen (N₂), and carbon monoxide (CO).

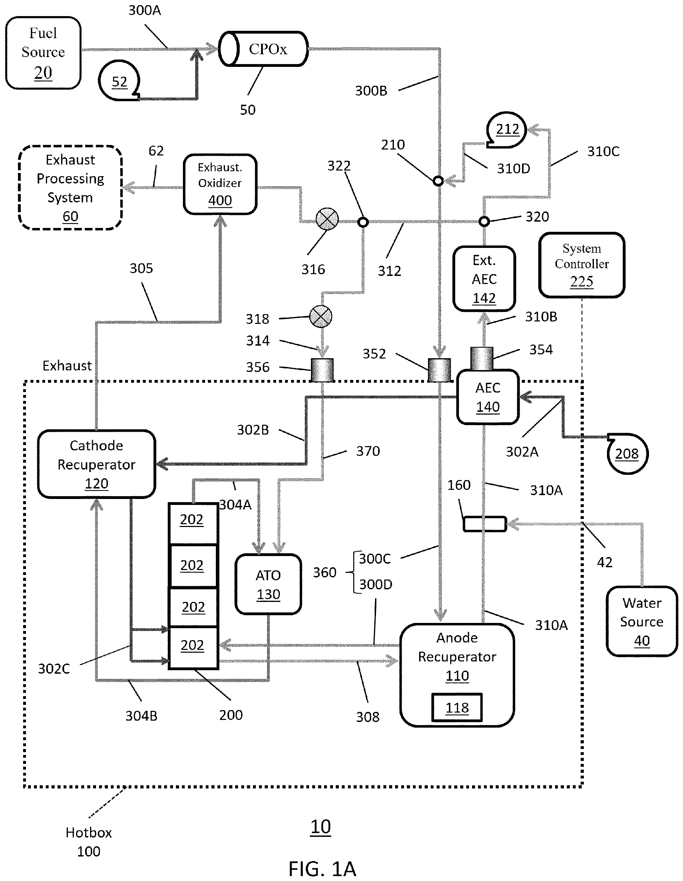

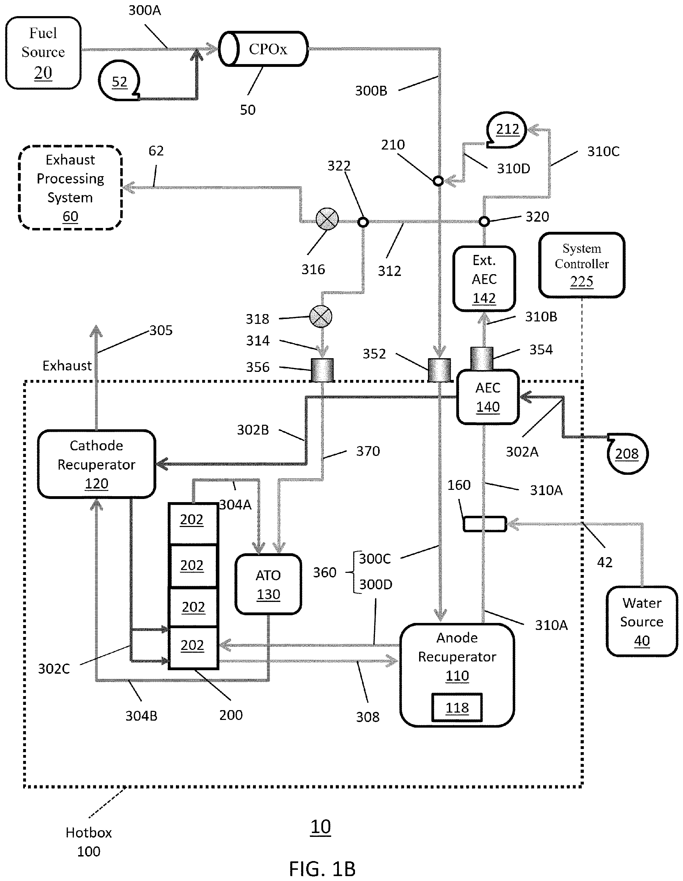

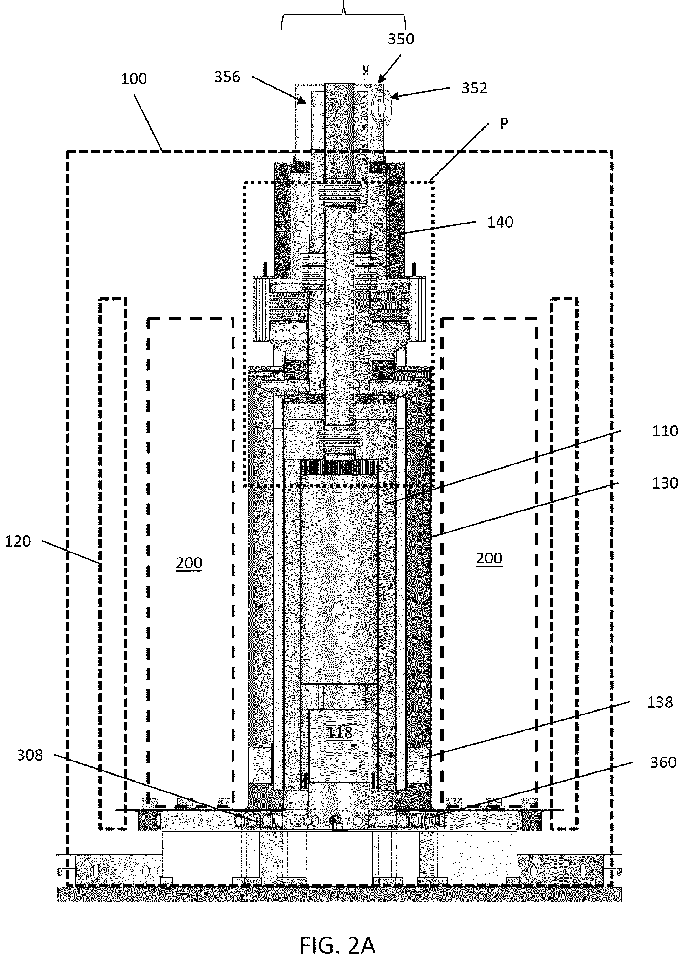

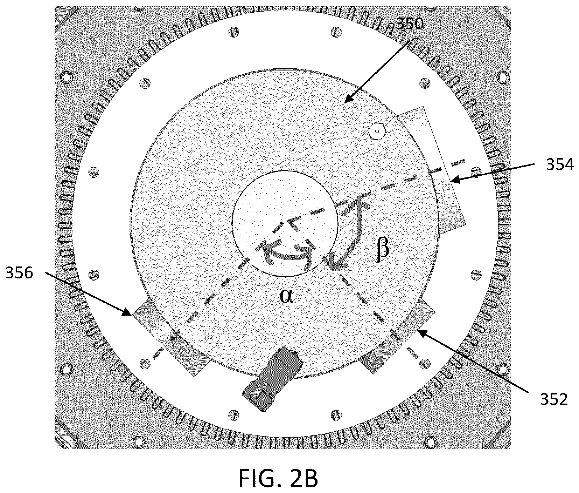

FIGS. 1A and 1B are schematic representation of SOFC systems 10, according to various embodiments of the present disclosure. FIG. 2A is a cross-sectional view showing a central column 320 of the system 10 of FIGS. 1A and 1B, and FIG. 2B is a top view of the central column 320 of FIG. 2A. The SOFC system 10 may correspond to one of the power modules of a power generation system. Referring to FIGS. 1A, 1B and 2A, the system 10 includes a hotbox 100 and various components located therein or adjacent thereto. The hotbox 100 may contain at least one fuel cell column 200 including fuel cell stacks 202, such as SOFC stacks containing alternating fuel cells and interconnects. One solid oxide fuel cell contains a ceramic electrolyte, such as yttria stabilized zirconia (YSZ), scandia stabilized zirconia (SSZ), scandia and ceria stabilized zirconia or scandia, yttria and ceria stabilized zirconia, an anode electrode, such as a nickel-YSZ, a nickel-SSZ or nickel-doped ceria cermet, and a cathode electrode, such as lanthanum strontium manganite (LSM). The interconnects may be metal alloy interconnects, such as chromium-iron alloy interconnects.

The hotbox 100 may also contain an anode recuperator heat exchanger 110, a cathode recuperator heat exchanger 120, an anode tail gas oxidizer (ATO) 130, an anode exhaust cooler heat exchanger 140, and an optional water injector 160. The system 10 may also include a catalytic partial oxidation (CPOx) reactor 50, a CPOx blower 52 (e.g., CPOx air blower), a system blower 208 (e.g., system air blower), and an anode recycle blower 212, which may be located outside of the hotbox 100. However, the present disclosure is not limited to any particular location for each of the components with respect to the hotbox 100.

The CPOx reactor 50 receives a fuel inlet stream from a fuel source 20, through a first fuel inlet conduit 300A. The fuel source 20 may be a fuel tank or a utility natural gas line including a valve to control an amount of fuel provided to the CPOx reactor 50. The CPOx blower 52 may provide air to the CPOx reactor 50 during system start-up. The fuel and/or air output from the CPOx reactor 50 may be provided to a fuel inlet 352 of a fuel conduit assembly 360 by a second fuel inlet conduit 300B. Fuel flows through the fuel conduit assembly 360 to the anode recuperator 110. The fuel is heated in the anode recuperator 110 by the fuel (anode) exhaust and the fuel then flows from the anode recuperator 110 to the fuel cell column 200 through fuel conduit assembly 360. The fuel conduit assembly 360 may comprise one or more inlet conduits, such as a third fuel inlet conduit 300C and a fourth fuel inlet conduit 300D.

The system blower 208 may be configured to provide an air stream (e.g., air inlet stream) to the anode exhaust cooler 140 through a first air conduit 302A. Air flows from the anode exhaust cooler 140 to the cathode recuperator 120 through a second air conduit 302B. The air is heated by the ATO exhaust in the cathode recuperator 120. The air flows from the cathode recuperator 120 to the fuel cell column 200 through a third air conduit 302C.

An anode exhaust (e.g., fuel exhaust stream) generated in the fuel cell column 200 is provided to the anode recuperator 110 through anode exhaust collection conduit 308. The anode exhaust may contain unreacted fuel and may also be referred to herein as a fuel exhaust. The anode exhaust may be provided from the anode recuperator 110 to the second fuel inlet conduit 300B by one or more recycling conduits 310A- 310D, in order to mix the anode exhaust with incoming fresh fuel in the second fuel inlet conduit 300B. A first recycling conduit 310A may fluidly connect an outlet of the anode recuperator 110 to an inlet of the anode exhaust cooler 140. A second recycling conduit 310B may fluidly connect an anode exhaust outlet 354 of the hotbox 100 configured to receive anode exhaust from the anode exhaust cooler 140 located inside the hotbox 100 to a secondary anode exhaust cooler 142 located outside the hotbox 300. A third recycling conduit 310C may fluidly connect an outlet of the secondary anode exhaust cooler 142 to an inlet of the anode recycle blower 212. A fourth recycling conduit 310D may fluidly connect an outlet of the recycle blower 212 to the second fuel inlet conduit 300B, where the anode exhaust mixes with incoming fresh fuel.

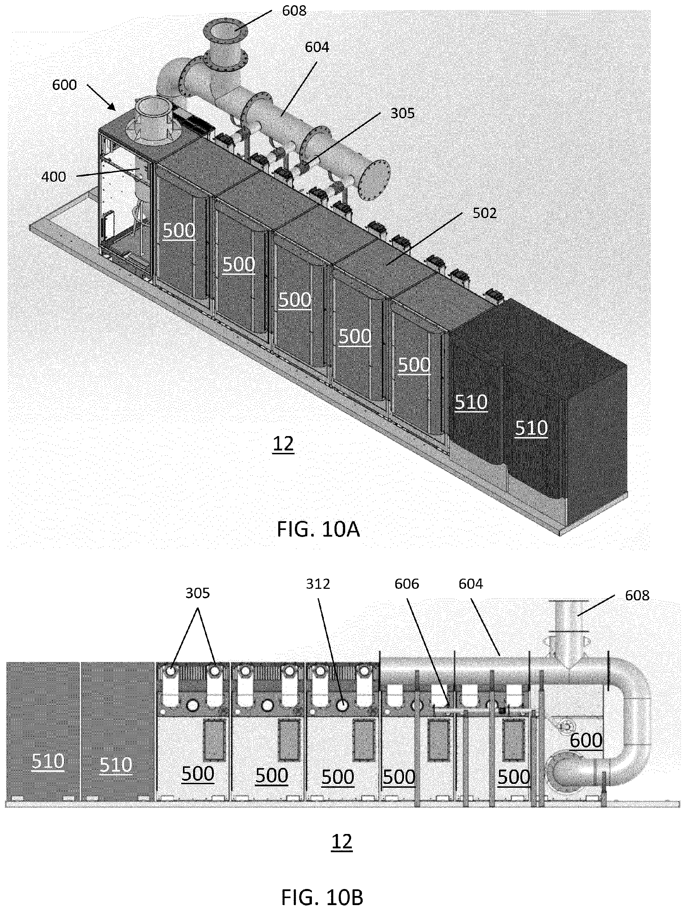

The secondary anode exhaust cooler 142 may be, for example, a finned radiator or heat exchanger located outside of the hotbox 100. The secondary anode exhaust cooler 142 may be configured to cool the anode exhaust output from the hotbox 100 to protect the recycle blower from thermal stress and/or damage. In some embodiments, the hotbox 100 may be located in a module cabinet or housing (shown in FIG. 10A) and the secondary anode exhaust cooler 142 may be configured to cool the anode exhaust using ventilation air flowing through the module cabinet.

Water flows from a water source 40, such as a water tank or a water pipe, to the water injector 160 through a water conduit 42. The water injector 160 may be configured to inject water into anode exhaust flowing through the first recycling conduit 310A. Heat from the anode exhaust (also referred to as a recycled anode exhaust stream) vaporizes the water to generate steam which humidifies the anode exhaust. The humidified anode exhaust is provided to the anode exhaust cooler 140. Heat from the anode exhaust provided to the anode exhaust cooler 140 may be transferred to the air inlet stream provided from the system blower 208 to the cathode recuperator 120. The cooled humidified anode exhaust may then be provided from the anode exhaust cooler 140 to the secondary anode exhaust cooler 142 through the second recycling conduit 310B. The anode recycle blower 212 may be configured to move the anode exhaust though the second, third and fourth recycling conduits 310B, 310C and 310D into a mixer 210. The anode exhaust stream mixes with the fuel inlet stream from the second fuel inlet conduit 300B in the mixer 210 to form a humidified fuel mixture. The mixer 210 may comprise a "T" shaped junction of the second fuel inlet conduit 300B and the fourth recycling conduit 310D.

The system 10 may also include one or more fuel reforming catalysts 118, located inside and/or downstream of the anode recuperator 110. The reforming catalyst(s) partially reform the humidified fuel mixture before it is provided to the fuel cell column 200.

Cathode (i.e., air) exhaust generated in the fuel cell column 200 is provided to the ATO 130 by a first cathode exhaust conduit 304A. The system 10 may also include an exhaust catalyst 138 (see FIG. 2A) located in the ATO 130 and configured to react exhaust components, such as carbon monoxide. The ATO exhaust flows from the ATO 130 to the cathode recuperator 120, through a second cathode exhaust conduit 304B. The ATO exhaust flows from the cathode recuperator 120 and out of the hotbox 100 through the ATO exhaust conduit 305.

The system 10 may further include a system controller 225 configured to control various elements of the system 10. The system controller 225 may include a central processing unit configured to execute stored instructions. For example, the system controller 225 may be configured to control fuel and/or air flow through the system 10, according to fuel composition data, by controlling the blowers 52, 208 and/or 212.

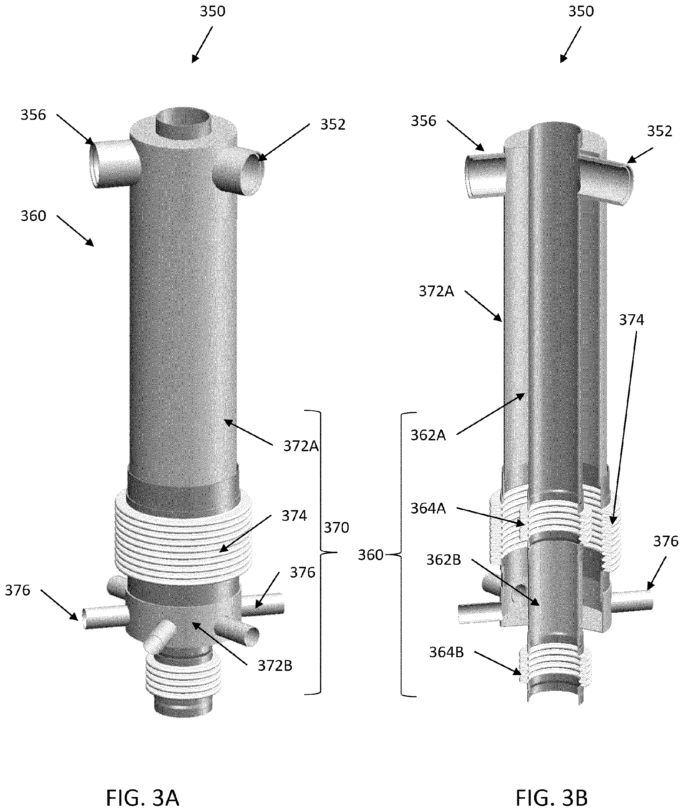

As shown in FIGS. 2A and 2B, the central column 320 located inside the hotbox 100 may include the anode recuperator 110, the ATO 130, and the anode exhaust cooler 140. The fuel cell columns 200 may surround the central column 320, and the cathode recuperator 120 may surround the fuel cell columns 200. As discussed in detail with respect to FIGS. 3A-3D, the central column 320 may also include a concentric manifold 350 that includes the anode exhaust outlet 354, the fuel conduit assembly 360, and an ATO conduit assembly 370 including an anode exhaust inlet 356.

The fuel inlet 352, anode exhaust outlet 354, anode exhaust inlet 356, and optionally an upper portion of the anode exhaust cooler 140 may be located on a portion of the central column 320 that extends outside of the top surface of the hotbox 100. As shown in FIG. 2B, an angle α formed between the fuel inlet 352 and the anode exhaust inlet 356 may range from about 70° to about 100°, such as 80 to 90°. An angle β formed between the fuel inlet 352 and the anode exhaust outlet 354 may range from about 55° to about 75°, such as 60 to 70°.

The anode exhaust may contain about 35 to 45 wt.% water, which can be removed using a condenser. A remaining dry content of anode exhaust may include about 95 wt.% carbon dioxide and about 5 wt.% hydrogen and carbon monoxide.

In prior art SOFC systems, anode exhaust may be routed directly to an ATO using a splitter, ATO injector and/or conduits located within the hotbox. However, when anode exhaust is routed outside of a hotbox 100, such as when anode exhaust is provided to an exhaust processing system 60 as shown in FIGS. 1A and 1B, conduits used to return the anode exhaust to the ATO may significantly restrict the flow of the anode exhaust. In particular, the present inventors determined that space constraints within a hotbox 100 may limit the size of such conduits, resulting in a significant system pressure drop.

Accordingly, the system 10 of FIG. 1A may include an exhaust oxidizer 400, a bypass conduit 312, a return conduit 314, a processing conduit 62, a bypass valve 316, a return valve 318 (ATO valve), a first splitter 320 and a second splitter 322. The bypass conduit 312 may fluidly connect the third recycling conduit 310C to an inlet of the exhaust oxidizer 400. The first splitter 320 may be located on the third recycling conduit 310C and may split the anode exhaust between the bypass conduit 312 and the recycle blower 212. The ATO exhaust conduit 305 may also be fluidly connected to the exhaust oxidizer 400. As such, ATO exhaust and anode exhaust may be output from the hotbox 100 to the exhaust oxidizer 400, via respective conduits 305 and 312. As discussed in more detail with respect to FIGS. 10A-10C, the exhaust oxidizer 400 may be configured to oxidize anode exhaust using the ATO exhaust received from one or more hotboxes 100. In some embodiments, the exhaust oxidizer 400 may include one or more exhaust oxidation catalysts configured to generate carbon dioxide by oxidizing exhaust received from one or more hotboxes 100.

An exhaust processing system 60 may be fluidly connected to the exhaust oxidizer 400 by the processing conduit 62. In the embodiment of FIG. 1A, the exhaust processing system 60 may comprise a heat recovery system which recovers heat from the exhaust oxidizer 400 outlet stream provided by the processing conduit 62.

In an alternative embodiment shown in FIG. 1B, the exhaust oxidizer 400 is omitted. In this embodiment, the anode exhaust is provided to the exhaust processing system 60 via the processing conduit 62 without passing through the exhaust oxidizer 400 and without being mixed with the ATO exhaust which flows through the ATO exhaust conduit 305. In this embodiment, the exhaust processing system 60 may include a carbon dioxide separation system configured to separate carbon dioxide from the anode exhaust to generate a commercially valuable carbon dioxide product. The exhaust processing system 60 may also include other exhaust processing components, such as a condenser to remove any remaining water from the anode exhaust, and/or at least one electrochemical pump and/or distillation system, to separate other valuable exhaust components, such as hydrogen and/or carbon monoxide. In some embodiments, the exhaust processing system 60 may be configured to receive exhaust from multiple hotboxes 100 (e.g., may be connected to multiple systems 10).

Referring to both FIGS. 1A and 1B, the return conduit 314 may be connected to the second splitter 322 located on the bypass conduit 312. The second splitter 322 splits the anode exhaust between the exhaust oxidizer 400 and the return conduit 314. The return conduit 314 fluidly connects the bypass conduit 312 to the anode exhaust inlet 356. The ATO conduit assembly 370 may fluidly connect the anode exhaust inlet 356 to the ATO 130. The bypass valve 316 may control anode exhaust flow through the bypass conduit 312, and the return valve 318 may control anode exhaust flow through the return conduit 314. The valves 316, 318 may be electrically operated valves, such as solenoid valves or the like, that are controlled by the system controller 225.

In some embodiments, the bypass conduit 312 may be connected to the third recycling conduit 310C upstream of the recycle blower 212, with respect to an anode exhaust flow direction through the third recycling conduit 310C. However, in an alternative embodiment, the bypass conduit 312 may be fluidly connected to the fourth recycling conduit 310D, downstream of the anode recycle blower 212, to provide additional anode exhaust flow pressure to the bypass conduit 312.

The system controller 225 may be configured to control the operation of the valves 316, 318 and/or the recycle blower 212 to control anode exhaust flow to the exhaust processing system 60, the ATO 130, and/or the fuel cell column 200.

For example, during system startup, shutdown, and/or transient operation, the bypass valve 316 may be closed, the return valve 318 may be opened, and the recycle blower 212 may be stopped or operated at a low speed, such that anode exhaust is provided to the ATO 130 generate heat and bring the system 10 up to the system operating temperature (e.g., a temperature above 700 °C, such as from 750 °C to 900 °C). During steady-state operation, the bypass valve 316 may be opened and the return valve 318 may be closed, such that all or a majority of the anode exhaust is provided to the exhaust processing system 60.

In alternative embodiments, the return valve 318 may be partially opened during steady-state operation, to provide the ATO 130 with a relatively reduced amount of anode exhaust. If the system 10 is operated using a hydrocarbon fuel (e.g., natural gas, methane, etc.), some amount of anode exhaust may be provided to the ATO 130 to maintain system operating temperatures during steady-state operations. In some embodiments, an amount of the anode exhaust that is provided to the exhaust processing system 60 and/or the ATO 130, and a corresponding amount of the anode exhaust that is recycled to the fuel cell column 200, may be at least partially controlled by controlling the speed of the recycle blower 212.

Thus, a method of operating a fuel cell system 10 includes providing an air inlet stream to stacks 202 of fuel cells located in a hotbox 100; providing a fuel inlet stream through a fuel conduit assembly 360 to the stacks 102 to generate power, a cathode exhaust and an anode exhaust; providing the anode exhaust outside of the hotbox (e.g., via the conduit 310B); recycling a first portion of the anode exhaust provided outside of the hotbox 100 into the fuel inlet stream (e.g., via the conduits 310C and 310D); providing a second portion of the anode exhaust provided outside of the hotbox into an exhaust processing system 60 located outside of the hotbox 100 (e.g., via the conduit 312); providing a third portion of the anode exhaust provided outside of the hotbox into the ATO 130 located in the hotbox 100 (e.g., via the conduit 314 and the ATO conduit assembly 370 which concentrically surrounds the fuel conduit assembly 360); and providing the cathode exhaust into the ATO 130 (e.g., via the conduit 304A) to oxidize the third portion of the anode exhaust.

In the embodiment of FIG. 1A, the method also includes providing the second portion of the anode exhaust provided outside of the hotbox 100 into an exhaust oxidizer 400 located outside of the hotbox 100; and providing a system exhaust from the ATO 130 into the exhaust oxidizer 400 (e.g., via the conduit 305) to oxidize the second portion of the anode exhaust in the exhaust oxidizer. The oxidized second portion of the anode exhaust is provided from the exhaust oxidizer 400 into the exhaust processing system 60 in the embodiment of FIG. 1A.

In the embodiment of FIG. 1A, the second portion of the anode exhaust is provided to the exhaust oxidizer 400 during steady state operation of the fuel cell system, and is not provided to the exhaust oxidizer 400 during start up or shut down of the fuel cell system, while the third portion of the anode exhaust is provided to the ATO 130 during the start up and the shut down of the fuel cell system. The third portion of the anode exhaust may also optionally be provided to the ATO 130 during the steady state operation of the fuel cell system.

Locating the bypass valve 316 and the return valve 318 outside of the hotbox 100 may provide the benefit of protecting the valves 316, 318 from damage due to exposure to high temperatures inside of the hotbox 100. For example, this configuration allows for the use of relatively inexpensive valves, as compared to valves rated for high temperature operation.

The present inventors determined that space constraints within prior SOFC systems limited the size of conduits used to provide anode exhaust to the ATO, resulting in an undesirable restriction in anode exhaust flow to the ATO. As such, prior systems suffered from excessively high anode exhaust pressure drop when routing exhaust back to the ATO. Accordingly, embodiments of the present disclosure provide various configurations that significantly improve anode exhaust flow to the ATO 130, by reducing anode exhaust flow restrictions and the corresponding anode exhaust pressure drop.

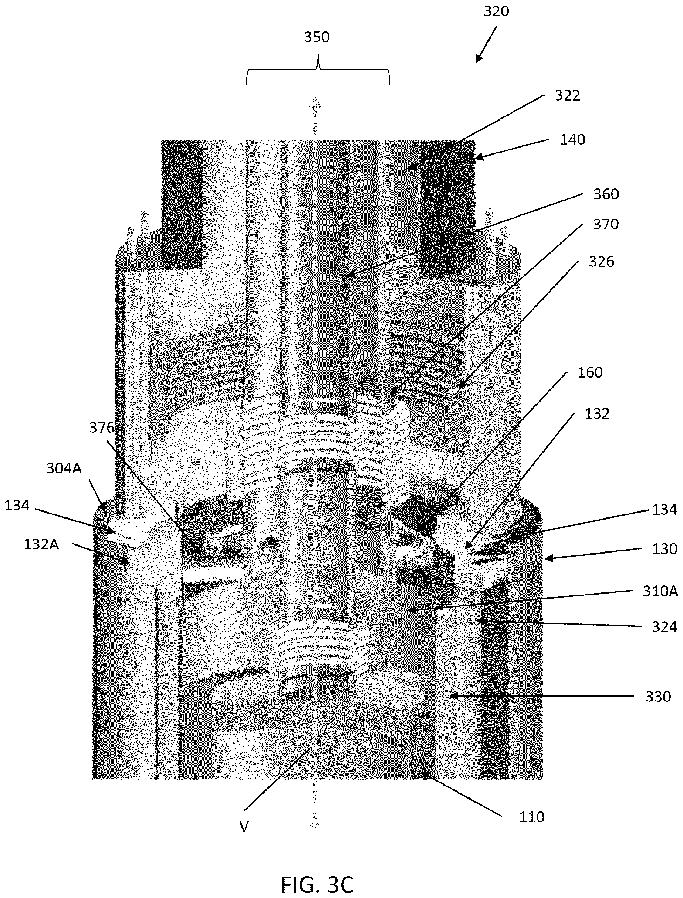

FIG. 3A is a perspective view of a concentric manifold 350 that may be included in the central column 320 of FIGS. 2A and 2B, according to various embodiments of the present disclosure, and FIG. 3B is a cross-sectional view of the concentric manifold 350. FIG. 3C is a cross-sectional view showing a portion P of the central column 320 of FIG. 2A.

Referring to FIGS. 3A and 3B, the concentric manifold 350 may include various metallic components that are welded or brazed together. For example, the concentric manifold 350 may include the fuel conduit assembly 360 and the ATO conduit assembly 370, with the fuel conduit assembly 360 being concentrically surrounded by the ATO conduit assembly 370, with respect to a vertical axis of the central column 320.

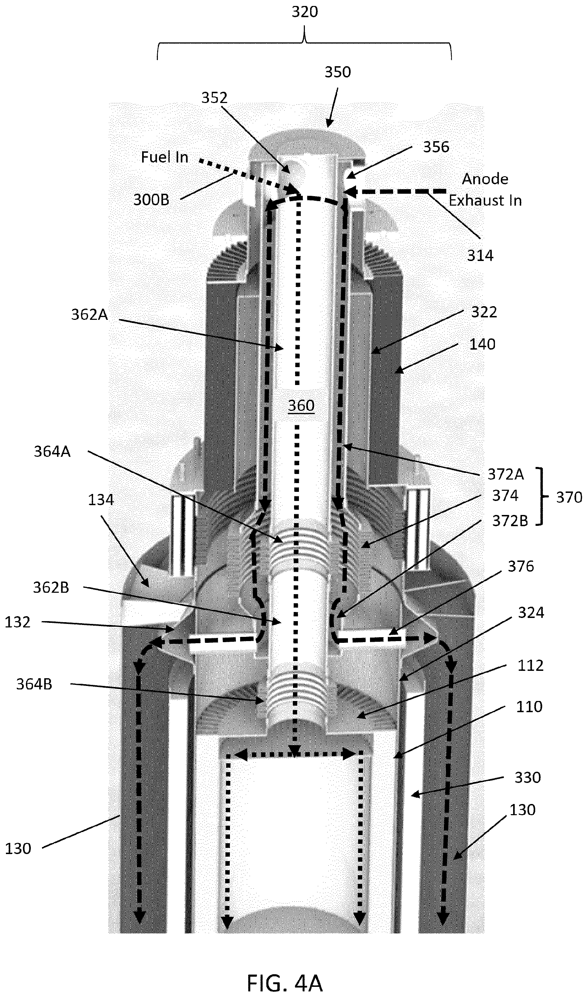

The fuel conduit assembly 360 may include a first fuel conduit 362A, a second fuel conduit 362B, a first bellows 364A, and a second bellows 364B. The first fuel conduit 362A may be fluidly connected to the fuel inlet 352. The first bellows 364A may fluidly connect the first fuel conduit 362A to the second fuel conduit 362B. The second bellows 364B may fluidly connect the second fuel conduit 362B to a top plate 112 (e.g., finger plate) of the anode recuperator 110 which is shown in FIG. 4A. The bellows 364A, 364B may be configured to expand and contract to buffer thermal expansion differences between the concentric manifold 350 and other system components or within the central column 320. In other words, the bellows 364A, 364B compensate for coefficient of thermal expansion (CTE) mismatch between components at high system operating temperatures, and they also compensate for different temperatures, even if the CTE is identical.

The ATO conduit assembly 370 may concentrically surround the fuel conduit assembly 360. The ATO conduit assembly 370 may include a first anode exhaust (also known as ATO feed) conduit 372A, a second anode exhaust conduit 372B, a bellows 374, and distribution conduits 376. The first anode exhaust conduit 372 may be fluidly connected to the anode exhaust inlet 356. The bellows 374 may fluidly connect the first anode exhaust conduit 372 to the second anode exhaust conduit 372B. The bottom of the second anode exhaust conduit 372B may be attached to the second fuel conduit 362B. The distribution conduits 376 may extend radially from the second anode exhaust conduit 372B and may fluidly connect the second anode exhaust conduit 372B to the ATO 130.

The ATO conduit assembly 370 may comprise six evenly spaced distribution conduits 376 as shown in FIGS. 3A and 3B. However, the ATO conduit assembly 370 may comprise any suitable number of distribution conduits 376 for evenly distributing the anode exhaust to the ATO 130. For example, the ATO conduit assembly 370 may comprise from 2 to 10 distribution conduits 376. The bellows 374 may be configured to expand and contract to buffer thermal expansion differences between the concentric manifold 350 and other system components. In other words, the bellows 374 compensates for coefficient of thermal expansion (CTE) mismatch between components at high system operating temperatures, or for different components at different operating temperatures.

Referring to FIG. 3C, the central column 320 may include an upper cylinder 322, a lower cylinder 324, a bellows 326, an ATO injector 132, and the water injector 160. The upper and lower cylinders 322, 324 may be connected to opposing sides of the bellows 326. The anode exhaust cooler 140 may be mounted on the outer surface of the upper cylinder 322. The concentric manifold 350 may extend inside of the upper cylinder 322, the bellows 326, and the lower cylinder 324.

The ATO injector 132 may be attached to the outer surface of the lower cylinder 324, such that an injection space is formed between the outer surface of the lower cylinder 324 and the inner surface of the ATO injector 132. The distribution conduits 376 may extend through the lower cylinder 324 and inside of the ATO injector 132. Injection apertures 132A may be formed in the ATO injector 132 such that the anode exhaust is provided from the ATO injector 132 into the ATO 130 through the injection apertures 132A.

The anode recuperator 110 may be located inside of the lower cylinder 324. An insulation layer 330 may be located on the outer surface of the lower cylinder 324 to insulate the ATO 130 from the anode recuperator 110. The water injector 160 may be located in the lower cylinder 324 adjacent to the distribution conduits 376. The water injector 160 may comprise a curved pipe with openings for injecting liquid water or steam into the anode exhaust flowing through the first recycling conduit 310A. A vortex generator (e.g., slanted metal plates) 134 may be located at the top of the ATO 130 and configured to swirl the cathode exhaust entering the top of the ATO 130 from the first cathode exhaust conduit 304A.

The anode recuperator 110, the ATO 130, the anode exhaust cooler 140, and the concentric manifold 350 may all be concentrically aligned with a central vertical axis V of the central column 320. In particular, the fuel conduit assembly 360 and the ATO conduit assembly 370 may both be concentrically arranged around the vertical axis V.

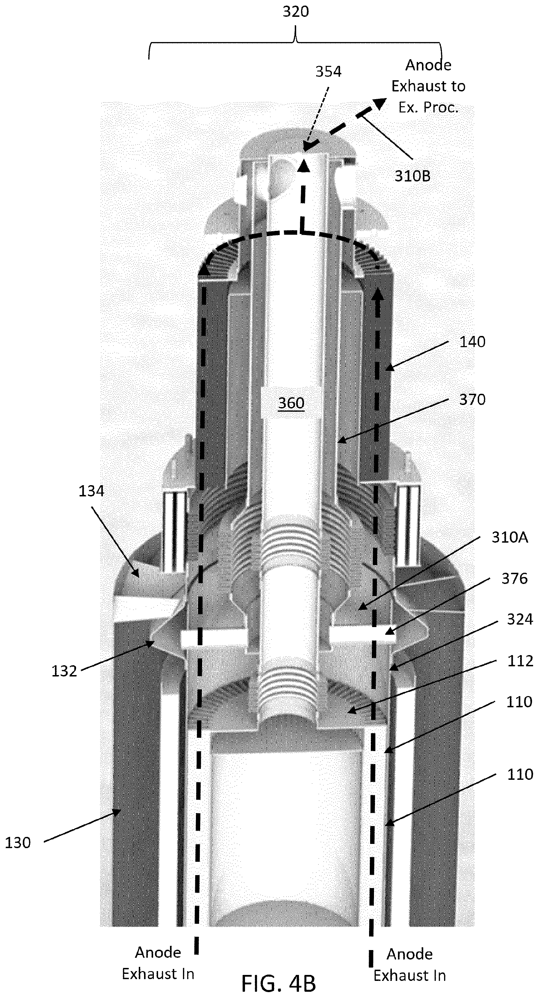

FIG. 4A is a cross-sectional view showing incoming fuel and anode exhaust flow through the central column 320 of FIGS. 2A and 2B, and FIG. 4B is a cross-sectional view showing outgoing anode exhaust flow through the central column 320 of FIGS. 2A and 2B, according to various embodiments of the present disclosure.

Referring to FIGS. 3A-3C and 4A, the fuel inlet stream is provided to the fuel inlet 352 from the second fuel inlet conduit 300B. The fuel inlet stream then flows through the fuel conduit assembly 360 into the anode recuperator 110. In particular, the fuel inlet stream may sequentially flow through the first fuel conduit 362A, the first bellows 364A, the second fuel conduit 362B, and the second bellows 364B, before entering the anode recuperator 110.

Anode exhaust is provided to the anode exhaust inlet 356 from the return conduit 314. The anode exhaust then flows through the ATO conduit assembly 370 to the ATO 130, by flowing between an inner surface of the ATO conduit assembly 370 and an outer surface of the fuel conduit assembly 360.

The anode exhaust flows through the first anode exhaust conduit 372A and the bellows 374 into the second anode exhaust conduit 372B. The distribution conduits 376 provide the anode exhaust from the second anode exhaust conduit 372B to the ATO injector 132. The anode exhaust then flows through the apertures 132A of the ATO injector 132 and is injected as separate anode exhaust streams into the ATO 130. The anode exhaust is mixed in the ATO with the cathode exhaust flowing into the top of the ATO 130 through the vortex generator 134. The radial separation of the anode exhaust into multiple anode exhaust streams in the ATO injector 132 improves radial flow and mixing of the anode exhaust in the ATO 130. Since the ATO conduit assembly 370 has a large area, the back pressure into the ATO conduit assembly 370 is relatively low, such as 0.1 psi or less, such as 0.1 psi to 0.005 psi. Accordingly, the ATO conduit assembly 370 may be configured to provide a very small pressure drop when providing the anode exhaust to the ATO 130.

Referring to FIGS. 3C and 4B, the anode exhaust provided to the anode recuperator 110 may flow out of the top of the anode recuperator 110 and upwards through the first recycling conduit 310A in the lower cylinder 324 while flowing radially outside of the concentric manifold 350. The anode exhaust may then flow into the bottom of the anode exhaust cooler 140, upwards through the anode exhaust cooler 140, and then out of the top of the anode exhaust cooler 140. The anode exhaust may then flow through the anode exhaust outlet 354 and into the second recycling conduit 310B. There is no direct path for anode exhaust to flow from the anode recuperator 110 into the ATO injector 132, since the anode exhaust stream is blocked off by the wall of the lower cylinder 324. This permits carbon dioxide in the anode exhaust to be separated from the ATO exhaust.

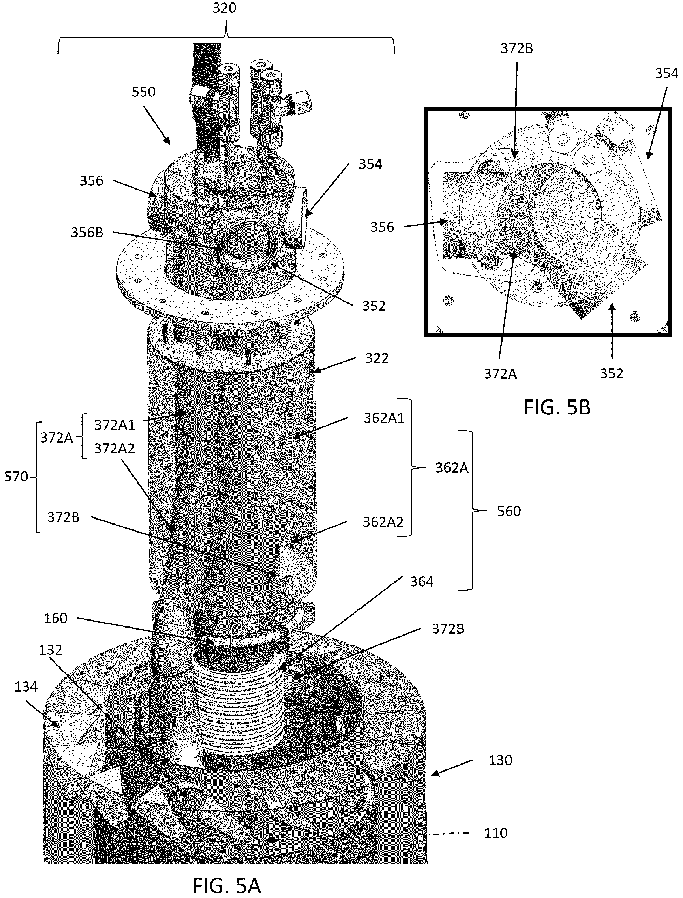

FIG. 5A is a partially transparent perspective view showing a central column 320 of an alternative embodiment including an alternative offset manifold 550, according to various embodiments of the present disclosure, and FIG. 5B is a top view of the offset manifold 550 of FIG. 5A. The central column 320 may be similar to the central column 320 of FIGS. 2A-3C. As such, only the differences therebetween will be discussed in detail.

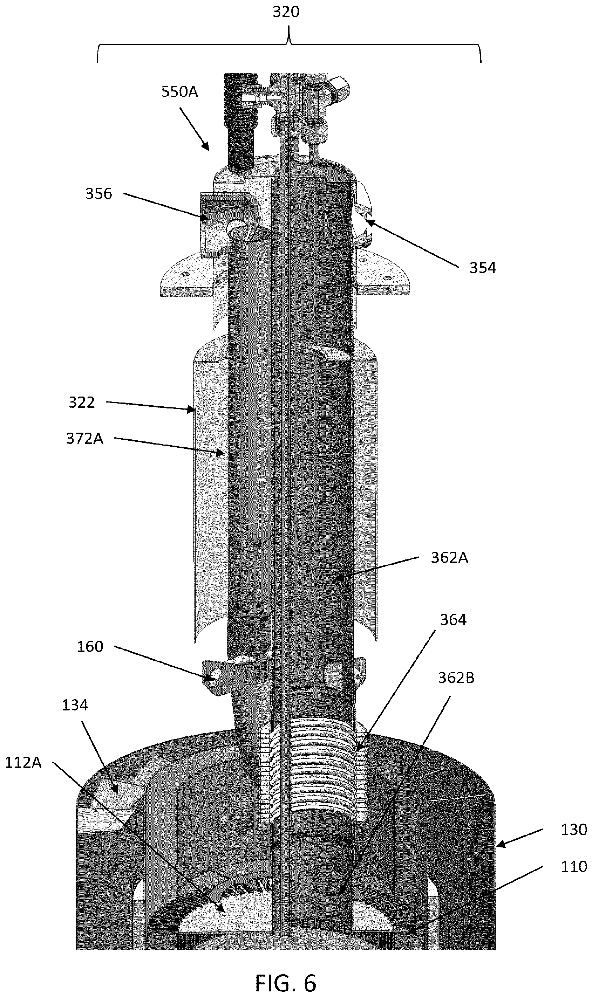

Referring to FIGS. 5A and 5B, the offset manifold 550 may include a fuel conduit 560 assembly comprising a fuel inlet 352, a first fuel conduit 362A that is fluidly connected to the fuel inlet 352, and a bellows 364 that fluidly connects the first fuel conduit 362A to a second fuel conduit 362B (see FIG. 6) that is connected to an anode recuperator 110. The first fuel conduit 362A may include a straight upper portion 362A1 and a curved lower portion 362A2. A central vertical axis of the upper portion 362A1 may be offset with respect to the central vertical axis V (see FIG. 3C) of the central column 320. A central axis of the lower fuel conduit, and the bellows 364 may be aligned with the vertical axis V of the central column 320.

The offset manifold 550 may also include an anode exhaust conduit assembly 570 including a first anode exhaust conduit 372A and a second anode exhaust conduit 372B that are fluidly connected to the anode exhaust inlet 356 and to an ATO 130 by an ATO injector 132. The anode exhaust conduits 372A, 372B may include straight upper portions and curved lower portions. For example, the first anode exhaust includes a straight upper portion 372A1 and a curved lower portion 372A2. Central axes of the straight upper portions 372A1 may be offset with respect to the central vertical axis V (see FIG. 3C) of the central column 320.

Accordingly, the upper portion of the first fuel conduit 362A may be positioned closer to the inner surface of the upper cylinder 322, such that additional space is provided for the anode exhaust conduits 372A, 372B within the upper cylinder 322. In other words, the offset position of the first fuel conduit 362A allows for two relatively large diameter anode exhaust conduits 372A, 372B to be accommodated within the upper cylinder 322, without increasing the diameter of the upper cylinder 322. As such, the offset manifold 550 may have lower anode exhaust pressure drop, as compared to prior designs that included one or more smaller diameter anode exhaust conduits.

FIG. 6 is a cross-sectional view showing an alternative offset manifold 550A, according to various embodiments of the present disclosure. The offset manifold 550A may be similar to the offset manifold 550 of FIG. 5A. As such, only the differences therebetween will be discussed in detail.

Referring to FIG. 6, the offset manifold 550A may include an offset fuel conduit assembly that includes a first fuel conduit 362A, a bellows 364, and a second fuel conduit 362B, all of which may be offset from a central axis of the central column 320. The offset manifold 550A may also include a first anode exhaust conduit 372A and a second anode exhaust conduit (not shown) that fluidly connect that anode exhaust inlet 356 to the ATO injector 132. Accordingly, the use of two straight fuel conduits 362A, 362B, may reduce manufacturing costs as compared to utilizing one or more bent fuel conduits. This embodiment may also mitigate any potential buckling of the curved conduit described in Fig. 5A.

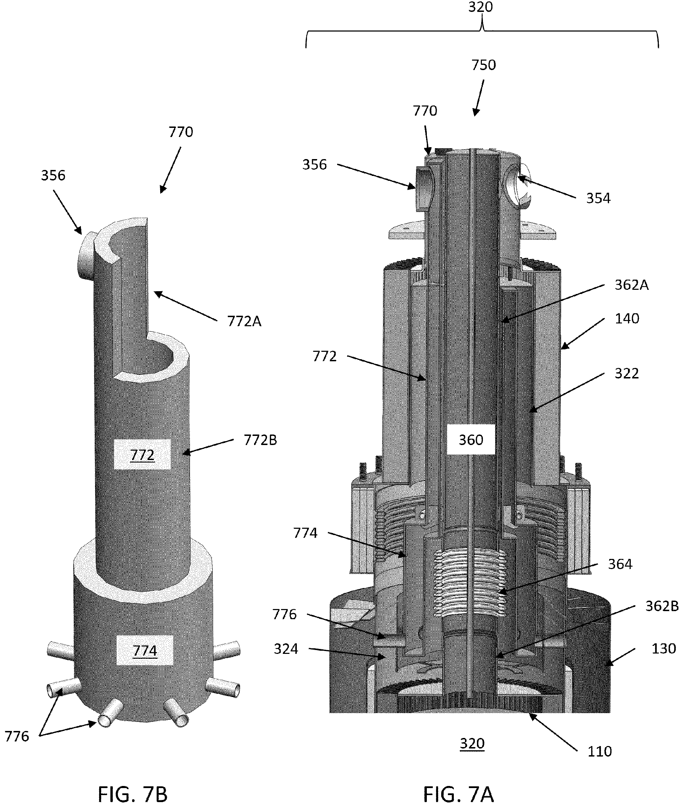

FIG. 7A is a cross-sectional view showing a central column 320 including an alternative concentric manifold 750, according to various embodiments of the present disclosure, and FIG. 7B is a perspective view of an anode exhaust conduit assembly 770 of FIG. 7A. The central column 320 may be similar to the central column 320 of FIGS. 2A-3C. As such, only the differences therebetween will be discussed in detail.

Referring to FIGS. 7A and 7B, the concentric manifold 750 may include a fuel conduit assembly 360 that is concentrically located within the anode exhaust conduit assembly 770. The fuel conduit assembly 360 may include a first fuel conduit 362A, a first bellows 364A, and a second fuel conduit 362B, as shown in FIG. 7A. However, in other embodiments the fuel conduit assembly 360 may also optionally include a second bellows 364B, as shown in FIG. 3B.

The anode exhaust conduit assembly 770 may include a first anode exhaust conduit 772, a second anode exhaust conduit 774, and injection conduits 776. The first anode exhaust conduit 772 and the second anode exhaust conduit 774 may surround the fuel conduit assembly 360. Inner and outer walls of the first anode exhaust conduit 772 and the second anode exhaust conduit 774 may define an annular flow path for anode exhaust flow from the anode exhaust inlet 356 to the injection conduits 776 and then into ATO 130.

The first anode exhaust conduit 772 may include a first portion 772A and a second portion 772B located below the first portion. The first portion 772A may fluidly connect the anode exhaust inlet 356 to the second portion 772B. The first portion 772A may be arcuate (e.g., wedge-shaped). In particular, the first portion 772A may have an arc radius having an angle ranging from about 130° to about 170°, such as from about 140° to about 160°, or about 150°. Accordingly, the first portion 772A may form an arcuate internal anode exhaust flow path. In addition, the first portion 772A may provide additional space at the top of the central column 320 for other components such as the anode exhaust outlet 354 and associated conduits.

The second portion 772B may be cylindrical and may be fluidly connected to the second anode exhaust conduit 774. The second portion 772B may form an annular internal anode exhaust flow path.

The second anode exhaust conduit 774 may surround a bellows 364 of the fuel conduit assembly 360. The second anode exhaust conduit 774 may have a larger diameter than the first anode exhaust conduit 772, in order to accommodate the bellows 364 and in order to take advantage of additional space in the central column 320 below the upper cylinder 322.

The injection conduits 776 may fluidly connect the second anode exhaust conduit 774 to the ATO 130. In particular, the injection conduits 776 may extend radially from the second anode exhaust conduit 774 and through the lower cylinder 324 of the central column 320, to enter the ATO 130. In one embodiment, the ATO injector 132 may be omitted. Alternatively, the ATO injector 132 may be provided at the ends of the injection conduits 776.

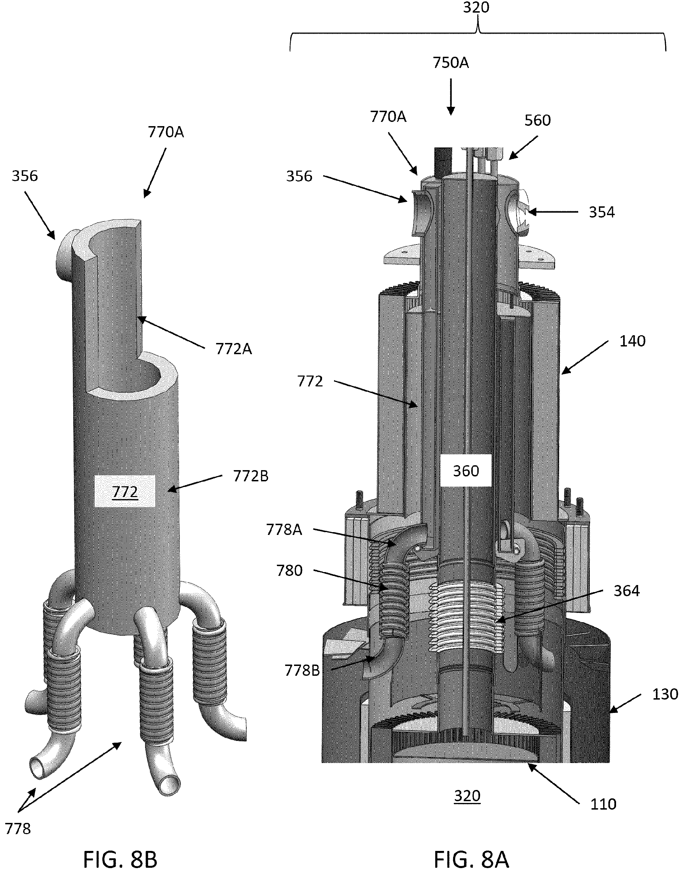

FIG. 8A is a cross-sectional view showing a central column 320 including an alternative concentric manifold 750A, according to various embodiments of the present disclosure, and FIG. 8B is a perspective view of an anode exhaust conduit assembly 770A of FIG. 8A. The central column 320 may be similar to the central column 320 of FIGS. 2A-3C. As such, only the differences therebetween will be discussed in detail.

Referring to FIGS. 8A and 8B, the concentric manifold 750A may include a fuel conduit assembly 360 that is concentrically located within the anode exhaust conduit assembly 770A. The anode exhaust conduit assembly 770A may include a first anode exhaust conduit 772 and injection conduits 778 that fluidly connect the first anode exhaust conduit 772 to the ATO 130. The injection conduits 778 may extend radially from the bottom of the first anode exhaust conduit 772. For example, the injection conduits 778 may extend downward past the bellows 364 to connect the first anode exhaust conduit 772 to the ATO 130.

The injection conduits 778 may include first conduits 778A, second conduits 778B, and bellows 780 connecting the first and second conduits 778A, 778B. The bellows 780 may be flexible structures configured to compensate for CTE differences in the central column 320. The first conduits 778A and the second conduits 778B may be bent so as to form curves of about 90°. The injection conduits 778 may be longer than the injection conduits 776 of FIGS. 7A and 7B and may allow for the omission of the second anode exhaust conduit 774.

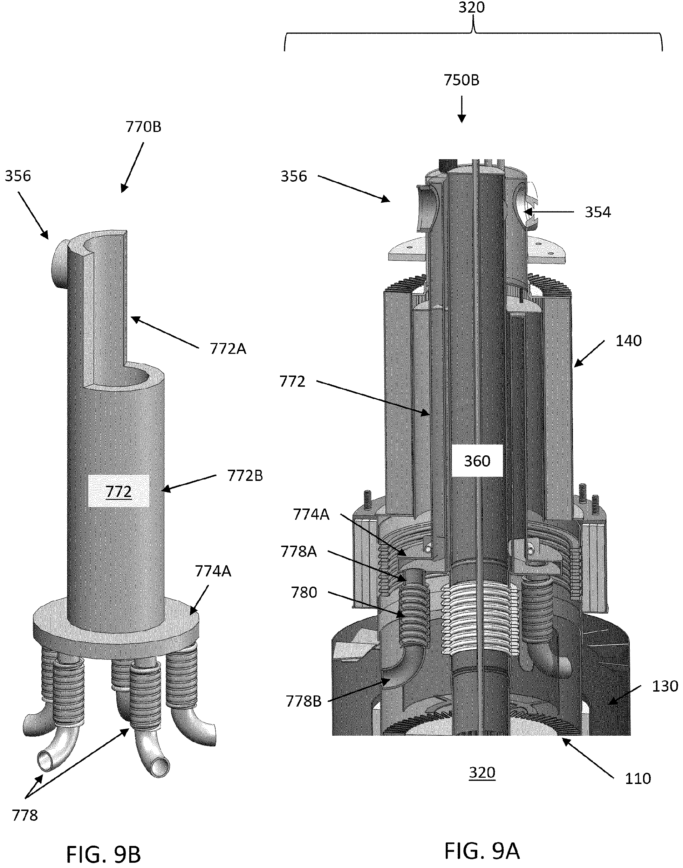

FIG. 9A is a cross-sectional view showing a central column 320 including an alternative concentric manifold 750B, according to various embodiments of the present disclosure, and FIG. 9B is a perspective view of an anode exhaust conduit assembly 770B of FIG. 9A. The central column 320 may be similar to the central column 320 of FIGS. 2A-3C. As such, only the differences therebetween will be discussed in detail.

Referring to FIGS. 9A and 9B, the concentric manifold 750B may include a fuel conduit assembly 360 that is concentrically located within the anode exhaust conduit assembly 770B. The anode exhaust conduit assembly 770B may include a first anode exhaust conduit 772, a second anode exhaust conduit 774A, and injection conduits 778 that fluidly connect the second anode exhaust conduit 774A to the ATO 130. The injection conduits 778 may include first conduits 778A, second conduits 778B, and bellows 780 connecting the first and second conduits 778A, 778B. The second anode exhaust conduit 774A may comprise a disk shaped manifold which has a larger diameter than the first anode exhaust conduit 772. As such, the first conduits 778A may be substantially straight and extend in a downward direction from the outer circumferential portions of the second anode exhaust conduit 774A. The second conduits 778B may be bent so as to form curves of about 90°, such that outlets of the second conduits 778B face the ATO 130.

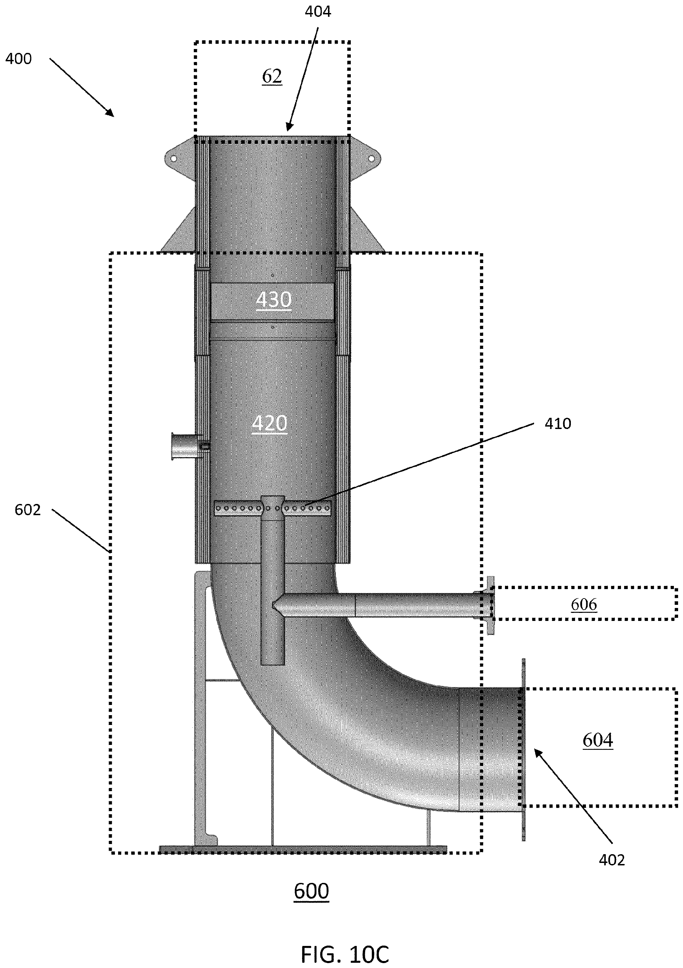

FIG. 10A is a partial perspective view of a modular fuel cell power system 12, according to various embodiments of the present disclosure, FIG. 10B is a partial side view of the system 12 of FIG. 10A, and FIG. 10C is a cross-sectional view showing an exhaust oxidizer 400 of FIG. 10A.

Referring to FIGS. 1A, 10A, and 10B, the system 12 includes a number of power modules 500, one or more auxiliary modules 510, such as a fuel processing module, a water treatment module, a telemetry module, and/or a power conditioning module, and an oxidation module 600. The power modules 500 may each include a cabinet 502 or housing in which the SOFC system 10 comprising the hotbox 100 and corresponding components are located.

The oxidation module 600 may include the exhaust oxidizer 400 and may be fluidly connected to the power modules 500 by a cathode exhaust manifold 604 and an anode exhaust manifold 606. For clarity, only portions of the manifolds 604, 606 are shown in FIGS. 10A and 10B. The cathode exhaust manifold 604 may be fluidly connected to the ATO exhaust conduits 305 of the power modules 500, and the anode exhaust manifold 606 may be fluidly connected to bypass conduits 312 of the power modules 500. In some embodiments, a diversion conduit 608 may be connected to the cathode exhaust manifold 604, upstream of the oxidation module 600. A damper (not shown) may be used to control the ATO exhaust flow through the diversion conduit 608.

The oxidation module 600 may include a cabinet or housing 602 in which the exhaust oxidizer 400 is located. As shown in FIG. 10C, the exhaust oxidizer 400 may comprise an oxidation conduit including an inlet 402, an outlet 404, an injection nozzle 410, a reaction zone 420, and an oxidation catalyst 430. The cathode exhaust manifold 604 may be configured to provide the ATO exhaust from multiple power modules 500 to the inlet 402 of the exhaust oxidizer 400. The anode exhaust manifold 606 may be configured to provide anode exhaust from multiple power modules 500 to the injection nozzle 410 located inside the exhaust oxidizer 400. The outlet 404 of the exhaust oxidizer 400 may be fluidly connected to the processing conduit 62.

The ATO exhaust may flow from the ATO exhaust conduits 305 into the cathode exhaust manifold 604. The ATO exhaust then flows from the cathode exhaust manifold 604 into the inlet 402 of the exhaust oxidizer 400, past the injection nozzle 410, through the reaction zone 420, past the oxidation catalyst 430 and then to the outlet 404 of the exhaust oxidizer 400. The injection nozzle 410 may be located upstream of the reaction zone 420 and may be configured to inject the anode exhaust into the ATO exhaust stream. Accordingly, an oxidation reaction may occur between the anode and ATO exhaust streams in the reaction zone 420. The oxidation of any remaining oxidizable species may be promoted by the oxidation catalyst 430, which may be located downstream of the reaction zone 420. The oxidized exhaust may then be provided to the exhaust processing system 60 via the processing conduit 62. While a single oxidation catalyst 430 bed is shown in FIG. 10C, in alternative embodiments, two or more oxidation catalyst 430 beds may be arranged in series in the oxidation module 600. In one embodiment, a gap may be provided between the oxidation catalyst 430 beds to allow better mixing of the ATO exhaust and the anode exhaust and/or more residence time at an elevated temperature of the mixed exhaust streams before the mixed exhaust streams are provided to a subsequent oxidation catalyst 430 bed.

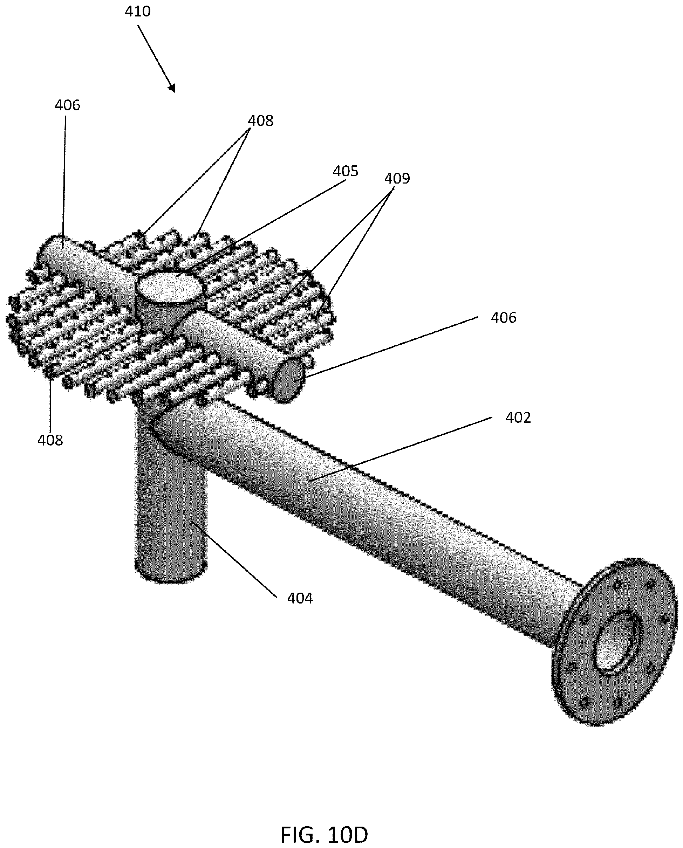

Referring to FIG. 10D, the injection nozzle 410 may comprise at least one conduit with one or more openings. For example, the injection nozzle 410 may comprise a horizontal conduit 402 connected to the anode exhaust manifold 606, a vertical conduit 404 connected to the horizontal conduit 402, a central distribution hub 405, central distribution conduits 406 extending horizontally from the central distribution hub 405, and peripheral distribution conduits 408 extending horizontally from the central distribution conduits 406 in perpendicular directions to the direction of the central distribution conduits 406. The peripheral distribution conduits 408 contain openings 409 facing upwards toward the reaction zone 420. The vertical conduit 404, the central distribution hub 405, the central distribution conduits 406 and the peripheral distribution conduits 408 are located inside the exhaust oxidizer 400. The anode exhaust flows from the anode exhaust manifold 606 through the conduits 402 and 404, through hub 405, through conduits 406 and 408 and out of the openings 409 into the reaction zone 420, where it is mixed with the ATO exhaust.

Fuel cell systems of the embodiments of the present disclosure are designed to reduce greenhouse gas emissions and have a positive impact on the climate.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.
The invention also refers to the following embodiments, wherein the term "claim" means "embodiment" :
1. A fuel cell system, comprising:
   a hotbox;
   one or more stacks of fuel cells located in the hotbox and configured to generate power and an anode exhaust;
   an anode tail gas oxidizer (ATO) located in the hotbox and configured to oxidize a portion of the anode exhaust;
   a recycling conduit located outside of the hotbox and configured to receive the anode exhaust output from the hotbox;
   a fuel conduit assembly configured to provide fuel to the one or more stacks; and
   an ATO conduit assembly concentrically surrounding the fuel conduit assembly and configured to receive a first portion of the anode exhaust diverted from the recycling conduit and to provide the first portion of the anode exhaust to the ATO.
2. The fuel cell system of claim 1, wherein the fuel conduit assembly comprises:
   a fuel inlet;
   a first fuel conduit fluidly connected to the fuel inlet;
   a second fuel conduit fluidly connected to the anode recuperator; and
   a first bellows fluidly connecting the first and the second fuel conduits.
3. The fuel cell system of claim 2, wherein the ATO conduit assembly comprises:
   an anode exhaust inlet;
   a first anode exhaust conduit fluidly connected to the anode exhaust inlet and surrounding the first fuel conduit;
   a second anode exhaust conduit surrounding the second fuel conduit;
   a second bellows fluidly connecting the first and second anode exhaust conduits and surrounding the first bellows; and
   injection conduits that fluidly connect the second anode exhaust conduit to the ATO.
4. The fuel cell system of claim 3, wherein the injection conduits extend radially from the second anode exhaust conduit to provide anode exhaust to an ATO injector comprising injection apertures configured to inject the first portion of the anode exhaust into the ATO.
5. The fuel cell system of claim 3, further comprising an anode recuperator heat exchanger located in the hotbox and configured to heat the fuel provided to the one or more stacks using the anode exhaust,
   wherein the fuel conduit assembly is configured to provide fuel to the one or more stacks through the anode recuperator heat exchanger.
6. The fuel cell system of claim 5, further comprising an anode exhaust cooler heat exchanger that surrounds the first anode exhaust conduit,
   wherein the anode recuperator heat exchanger is located below the anode exhaust cooler heat exchanger and the fuel conduit assembly and is surrounded by the ATO.
7. The fuel cell system of claim 2, wherein the ATO conduit assembly comprises:
   an anode exhaust inlet;
   a first anode exhaust conduit comprising:
      an arcuate first portion that is fluidly connected to the anode exhaust inlet and partially surrounding an upper portion of the first fuel conduit; and
      a cylindrical second portion that is fluidly connected to the first portion and surrounds a lower portion of the first fuel conduit;
   a second anode exhaust conduit fluidly connected to the second portion of the first anode exhaust conduit and surrounding the first bellows; and
   injection conduits that fluidly connect the second anode exhaust conduit to the ATO.
8. The fuel cell system of claim 7, wherein the injection conduits extend radially outward from a side surface of the second anode exhaust conduit to fluidly connect with the ATO.
9. The fuel cell system of claim 7, wherein the injection conduits extend downward from a bottom surface of the second anode exhaust conduit and then radially outward to fluidly connect with the ATO.
10. The fuel cell system of claim 2, wherein the ATO conduit assembly comprises:
   an anode exhaust inlet;
   a first anode exhaust conduit comprising:
      an arcuate first portion that is fluidly connected to the anode exhaust inlet and partially surrounding an upper portion of the first fuel conduit; and
      a cylindrical second portion that is fluidly connected to the arcuate first portion and surrounds a lower portion of the first fuel conduit; and
   injection conduits that fluidly connect the cylindrical second portion to the ATO, wherein the injection conduits comprise first curved conduits that extend from a side surface of the cylindrical second portion, second curved conduits that extend from the ATO, and bellows that fluidly connect the first and second curved portions.
11. The fuel cell system of claim 1, further comprising:
   a bypass conduit fluidly connecting the recycling conduit to an exhaust oxidizer and configured to provide a second portion of the anode exhaust to the exhaust oxidizer;
   a return conduit fluidly connecting the bypass conduit to the ATO conduit assembly;
   a bypass valve configured to control the second portion of the anode exhaust flow though the bypass conduit; and
   a return valve configured to control the first portion of the anode exhaust flow through the return conduit.
12. The fuel cell system of claim 11, wherein the one or more stacks are arranged in fuel cell columns disposed in the hotbox.
13. The fuel cell system of claim 12, further comprising a central column located in the hotbox and surrounded by the fuel cell columns, the central column comprising:
   an anode recuperator heat exchanger configured to heat the fuel provided to the fuel cell columns using the anode exhaust;
   the anode tail gas oxidizer (ATO) which surrounds the anode recuperator;
   an anode exhaust cooler heat exchanger located above the anode recuperator;
   the fuel conduit assembly; and
   the ATO conduit assembly.
14. The fuel cell system of claim 12, wherein:
   the hot box is located in a first power module cabinet; and
   a system exhaust conduit is fluidly connected to an outlet of the ATO.
15. The fuel cell system of claim 14, further comprising:
   a plurality of additional power module cabinets, each containing an additional hotbox containing additional fuel cell columns;
   an oxidation module cabinet containing the exhaust oxidizer;
   a cathode exhaust manifold fluidly connecting the exhaust oxidizer to the system exhaust conduit of the first power module cabinet and to respective system exhaust conduits of the additional power module cabinets; and
   an anode exhaust manifold fluidly connecting the exhaust oxidizer to the bypass conduit of the first power module cabinet and to respective bypass conduits of the additional power module cabinets.
16. The fuel cell system of claim 15, wherein the exhaust oxidizer comprises:
   an oxidation conduit fluidly connecting the cathode exhaust manifold to an exhaust processing system configured to separate components in the exhaust oxidizer exhaust stream;
   an injection nozzle located in the oxidation conduit, fluidly connected to the anode exhaust manifold, and configured to inject the second portion of the anode exhaust into the ATO exhaust to oxidize the second portion of the anode exhaust; and
   an oxidation catalyst located in the oxidation conduit.
17. A fuel cell power module, comprising:
   a hotbox;
   fuel cell columns located in the hotbox and comprising fuel cell stacks configured to generate power and an anode exhaust;
   a recycling conduit configured to receive the anode exhaust generated by the fuel cell columns and output from the hotbox;
   a bypass conduit configured to fluidly connect the recycling conduit to an exhaust processing system;
   a return conduit fluidly connected to the bypass conduit; and
   a central column surrounded by the fuel cell columns and comprising:
      an anode recuperator heat exchanger configured to heat fuel provided to the fuel cell columns using the anode exhaust;
      an anode tail gas oxidizer (ATO) surrounding the anode recuperator and configured to oxidize a portion of the anode exhaust;
      an anode exhaust cooler heat exchanger located above the anode recuperator heat exchanger;
      a fuel conduit assembly configured to provide the fuel to the fuel cell columns through the anode recuperator heat exchanger, wherein a central vertical axis of the fuel conduit assembly is laterally offset with respect to a central vertical axis of the central column; and
      an ATO conduit assembly located adjacent to the fuel conduit assembly and configured to fluidly connect the return conduit to the ATO.
18. A fuel cell system, comprising:
   a plurality of fuel cell power modules each comprising at least one fuel cell column and an anode tail gas oxidizer (ATO);
   an oxidation module containing an exhaust oxidizer conduit and an injection nozzle located in the exhaust oxidizer conduit;
   a cathode exhaust manifold fluidly connecting the exhaust oxidizer to outlets of the ATOs of the plurality of fuel cell power modules; and
   an anode exhaust manifold fluidly connecting the injection nozzle to anode exhaust recycling conduits of the plurality of fuel cell power modules.
19. A method of operating a fuel cell system, comprising:
   providing an air inlet stream to a stack of fuel cells located in a hotbox;
   providing a fuel inlet stream through a fuel conduit assembly to the stack of fuel cells to generate power, a cathode exhaust and an anode exhaust;
   providing the anode exhaust outside of the hotbox;
   recycling a first portion of the anode exhaust provided outside of the hotbox into the fuel inlet stream;
   providing a second portion of the anode exhaust provided outside of the hotbox into an exhaust processing system located outside of the hotbox;
   providing a third portion of the anode exhaust provided outside of the hotbox into an anode tail gas oxidizer (ATO) located in the hotbox; and providing the cathode exhaust into the ATO to oxidize the third portion of the anode exhaust.
20. The method of claim 19, further comprising:
   providing the second portion of the anode exhaust provided outside of the hotbox into an exhaust oxidizer located outside of the hotbox; and
   providing a system exhaust from the ATO into the exhaust oxidizer to oxidize the second portion of the anode exhaust, wherein the oxidized second portion of the anode exhaust is provided from the exhaust oxidizer into the exhaust processing system.
21. The method of claim 20, wherein:
   the second portion of the anode exhaust is provided to the exhaust oxidizer during steady state operation of the fuel cell system, and is not provided to the exhaust oxidizer during start up or shut down of the fuel cell system;
   the third portion of the anode exhaust is provided to the ATO during the start up and the shut down of the fuel cell system; and
   the third portion of the anode exhaust is provided to the ATO through an ATO conduit assembly which concentrically surrounds the fuel conduit assembly.

## Claims

1. A fuel cell system, comprising:
a hotbox;
one or more stacks of fuel cells located in the hotbox and configured to generate power and an anode exhaust;
an anode tail gas oxidizer (ATO) located in the hotbox and configured to oxidize a portion of the anode exhaust;
a recycling conduit located outside of the hotbox and configured to receive the anode exhaust output from the hotbox;
a fuel conduit assembly configured to provide fuel to the one or more stacks; and
an ATO conduit assembly concentrically surrounding the fuel conduit assembly and configured to receive a first portion of the anode exhaust diverted from the recycling conduit and to provide the first portion of the anode exhaust to the ATO.

2. The fuel cell system of claim 1, wherein the fuel conduit assembly comprises:
a fuel inlet;
a first fuel conduit fluidly connected to the fuel inlet;
a second fuel conduit fluidly connected to the anode recuperator; and
a first bellows fluidly connecting the first and the second fuel conduits.

3. The fuel cell system of claim 2, wherein the ATO conduit assembly comprises:
an anode exhaust inlet;
a first anode exhaust conduit fluidly connected to the anode exhaust inlet and surrounding the first fuel conduit;
a second anode exhaust conduit surrounding the second fuel conduit;
a second bellows fluidly connecting the first and second anode exhaust conduits and surrounding the first bellows; and
injection conduits that fluidly connect the second anode exhaust conduit to the ATO.

4. The fuel cell system of claim 3, wherein the injection conduits extend radially from the second anode exhaust conduit to provide anode exhaust to an ATO injector comprising injection apertures configured to inject the first portion of the anode exhaust into the ATO.

5. The fuel cell system of claim 3, further comprising:
an anode recuperator heat exchanger located in the hotbox and configured to heat the fuel provided to the one or more stacks using the anode exhaust, wherein the fuel conduit assembly is configured to provide fuel to the one or more stacks through the anode recuperator heat exchanger; and
an anode exhaust cooler heat exchanger that surrounds the first anode exhaust conduit, wherein the anode recuperator heat exchanger is located below the anode exhaust cooler heat exchanger and the fuel conduit assembly and is surrounded by the ATO.

6. The fuel cell system of claim 2, wherein the ATO conduit assembly comprises:
an anode exhaust inlet;
a first anode exhaust conduit comprising:
an arcuate first portion that is fluidly connected to the anode exhaust inlet and partially surrounding an upper portion of the first fuel conduit; and
a cylindrical second portion that is fluidly connected to the first portion and surrounds a lower portion of the first fuel conduit;
a second anode exhaust conduit fluidly connected to the second portion of the first anode exhaust conduit and surrounding the first bellows; and
injection conduits that fluidly connect the second anode exhaust conduit to the ATO.

7. The fuel cell system of claim 6, wherein the injection conduits extend radially outward from a side surface of the second anode exhaust conduit to fluidly connect with the ATO.

8. The fuel cell system of claim 6, wherein the injection conduits extend downward from a bottom surface of the second anode exhaust conduit and then radially outward to fluidly connect with the ATO.

9. The fuel cell system of claim 2, wherein the ATO conduit assembly comprises:
an anode exhaust inlet;
a first anode exhaust conduit comprising:
an arcuate first portion that is fluidly connected to the anode exhaust inlet and partially surrounding an upper portion of the first fuel conduit; and
a cylindrical second portion that is fluidly connected to the arcuate first portion and surrounds a lower portion of the first fuel conduit; and
injection conduits that fluidly connect the cylindrical second portion to the ATO, wherein the injection conduits comprise first curved conduits that extend from a side surface of the cylindrical second portion, second curved conduits that extend from the ATO, and bellows that fluidly connect the first and second curved portions.

10. The fuel cell system of claim 1, further comprising:
a bypass conduit fluidly connecting the recycling conduit to an exhaust oxidizer and configured to provide a second portion of the anode exhaust to the exhaust oxidizer;
a return conduit fluidly connecting the bypass conduit to the ATO conduit assembly;
a bypass valve configured to control the second portion of the anode exhaust flow though the bypass conduit; and
a return valve configured to control the first portion of the anode exhaust flow through the return conduit.

11. The fuel cell system of claim 10, wherein the one or more stacks are arranged in fuel cell columns disposed in the hotbox.

12. The fuel cell system of claim 11, further comprising a central column located in the hotbox and surrounded by the fuel cell columns, the central column comprising:
an anode recuperator heat exchanger configured to heat the fuel provided to the fuel cell columns using the anode exhaust;
the anode tail gas oxidizer (ATO) which surrounds the anode recuperator;
an anode exhaust cooler heat exchanger located above the anode recuperator;
the fuel conduit assembly; and
the ATO conduit assembly.

13. The fuel cell system of claim 11, wherein:
the hot box is located in a first power module cabinet; and
a system exhaust conduit is fluidly connected to an outlet of the ATO; and
the fuel cell system further comprises:
a plurality of additional power module cabinets, each containing an additional hotbox containing additional fuel cell columns;
an oxidation module cabinet containing the exhaust oxidizer;
a cathode exhaust manifold fluidly connecting the exhaust oxidizer to the system exhaust conduit of the first power module cabinet and to respective system exhaust conduits of the additional power module cabinets; and
an anode exhaust manifold fluidly connecting the exhaust oxidizer to the bypass conduit of the first power module cabinet and to respective bypass conduits of the additional power module cabinets,
wherein the exhaust oxidizer comprises:
an oxidation conduit fluidly connecting the cathode exhaust manifold to an exhaust processing system configured to separate components in the exhaust oxidizer exhaust stream;
an injection nozzle located in the oxidation conduit, fluidly connected to the anode exhaust manifold, and configured to inject the second portion of the anode exhaust into the ATO exhaust to oxidize the second portion of the anode exhaust; and
an oxidation catalyst located in the oxidation conduit.

14. A method of operating a fuel cell system, comprising:
providing an air inlet stream to a stack of fuel cells located in a hotbox;
providing a fuel inlet stream through a fuel conduit assembly to the stack of fuel cells to generate power, a cathode exhaust and an anode exhaust;
providing the anode exhaust outside of the hotbox;
recycling a first portion of the anode exhaust provided outside of the hotbox into the fuel inlet stream;
providing a second portion of the anode exhaust provided outside of the hotbox into an exhaust processing system located outside of the hotbox;
providing a third portion of the anode exhaust provided outside of the hotbox into an anode tail gas oxidizer (ATO) located in the hotbox; and
providing the cathode exhaust into the ATO to oxidize the third portion of the anode exhaust.

15. The method of claim 14, further comprising:
providing the second portion of the anode exhaust provided outside of the hotbox into an exhaust oxidizer located outside of the hotbox; and
providing a system exhaust from the ATO into the exhaust oxidizer to oxidize the second portion of the anode exhaust, wherein the oxidized second portion of the anode exhaust is provided from the exhaust oxidizer into the exhaust processing system,
wherein:
the second portion of the anode exhaust is provided to the exhaust oxidizer during steady state operation of the fuel cell system, and is not provided to the exhaust oxidizer during start up or shut down of the fuel cell system;
the third portion of the anode exhaust is provided to the ATO during the start up and the shut down of the fuel cell system; and
the third portion of the anode exhaust is provided to the ATO through an ATO conduit assembly which concentrically surrounds the fuel conduit assembly.
